# EUROPEAN PATENT SPECIFICATION

(11) **EP 1 363 032 B1**
(45) Date of publication and mention of the grant of the patent: **07.05.2008**
(21) Application number: 03011260.1
(22) Date of filing: 16.05.2003
(51) Int. Cl.: F16B 21/20, F02B 77/13, F16B 5/06

(54) **Device for connecting two panels one on top of the other by means of elastic fasteners, and relative elastic fastener**
Vorrichtung zur Verbindung zweier Verkleidungsplatten aufeinander mittels elastischer Befestiger und zugehöriger elastischer Befestiger
Dispositif pour relier deux panneaux un sur l'autre à l'aide des attaches élastiques, et attache élastique

(30) Priority: 17.05.2002 IT TO20020425
(43) Date of publication of application: 19.11.2003
(73) Proprietor: Manetti, Luciano Maria Sirio, 10131 Torino (IT); Manetti, Mauro Maria Rosolino, 10131 Torino (IT)
(72) Inventor: Manetti, Mauro Maria Rosolino, 10131 Torino (IT)
(74) Representative: Cerbaro, Elena

(56) References cited:
- EP-A- 0 886 074
- WO-A-94/02748
- DE-A- 2 846 103
- FR-A- 2 624 564

## Description

The present invention relates to a device for connecting two panels one on top of the other by means of elastic fasteners, and combination of two panels with said device.

Various connecting devices of the above type are known, wherein a first panel has at least one pin for engaging a corresponding hole in the other panel. In one known device, the elastic fastener is defined by a metal disk having a flat outer rim and a convex inner portion with a central hole into which the pin is inserted. The inner portion of the disk comprises a number of elastic tongues extending towards the centre and defined by radial slots; and each tongue has an arc-shaped edge defining the central hole and for elastically engaging the pin.

The manufacture of this type of fastener involves various machining operations, such as drawing blanking and riveting the disk, which must be performed in sequence, so that the unit cost of the fastener is relatively high.

From document EP-A-0 886 074, it is know a fastener for connecting two panels, which is formed of a plate having a frusto conical inner portion provided with elastic tongues and an outer brim with a flat portion contacting the outer panel. This fastener includes also an intermediate flat portion not contacting the panel and an intermediate frusto conical and segmented portion.

It is an object of the present invention to provide a device for connecting panels by means of highly reliable, low-cost elastic fasteners.

According to the present invention, there is provided a device for the connection of two panels one on top of the other by means of at least one elastic fastener, wherein a first of said panels has at least one pin for engaging a corresponding hole in the other panel; and wherein said elastic fastener is defined by a disk having an outer rim for engaging said other panel, said outer rim being flat to be placed contacting said other panel; said disk having also an inner portion with a central hole into which said pin is inserted; said inner portion comprising a number of elastic tongues, each having an arc-shaped edge, which defines said central hole and elastically engages said pin, said elastic fastener being moulded from plastic material capable of imparting to said elastic tongues sufficient elastic force to ensure said connection; characterized in that said inner portion being bowl-shaped with a convex surface, said edge having a surface which is slightly conical towards said inner portion, said slightly conical surface being knurled by means of a number of pointed radial projections substantially pyramid-shaped.

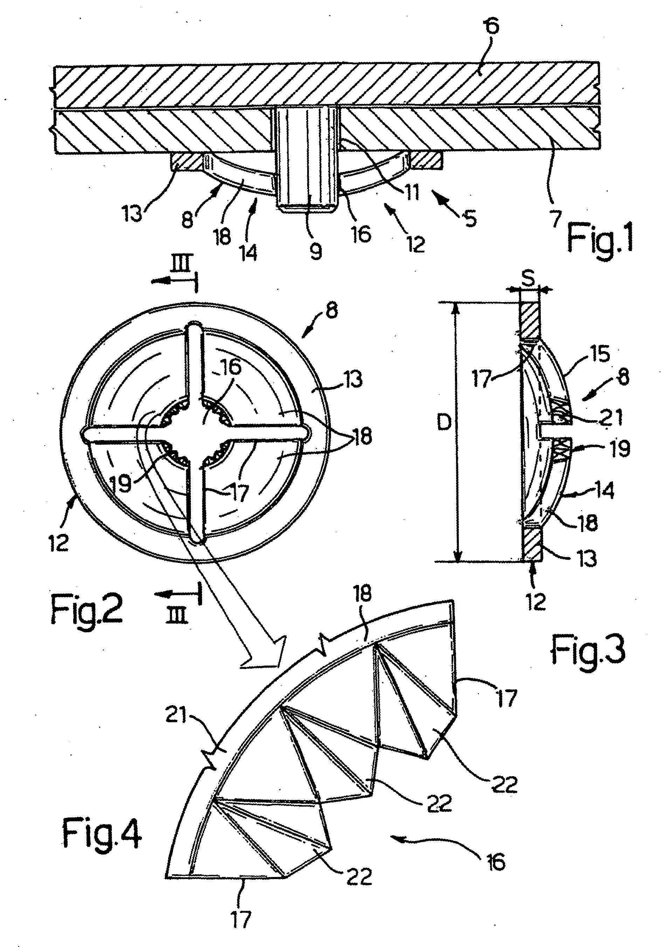

A preferred, non-limiting embodiment of the invention will be described by way of example with reference to the accompanying drawings, in which:
Figure 1 shows a partial section of a device for connecting two panels by means of elastic fasteners in accordance with the present invention;
Figure 2 shows a plan view of an elastic fastener;
Figure 3 showns a section along line III-III in Figure 2;
Figure 4 shows a much larger-scale detail of Figure 2.
Number 5 in Figure 1 indicates as a whole a device for connecting two panels 6 and 7 one on top of the other by means of press-in fasteners 8, only one of which is shown. A first panel 6 is preferably substantially rigid, and has at least one cylindrical-section pin 9 perpendicular to panel 6. The other panel 7 may be rigid or flexible, and has a hole 11 for and engaged by each pin 9 to connect the two panels 6 and 7.

Panel 6 may be made of rigid plastic material and in one piece with pins 9. By way of a non-limiting example, panel 6 may be defined by a vehicle internal combustion engine block cover, and panel 7 by a panel of soundproofing material connected between panel 6 and the engine.

Elastic fastener 8 is defined by a preferably circular disk 12 (see also Figures 2 and 3) having a flat circular outer rim 13 which is placed contacting panel 7. Disk 12 also comprises a convex, e.g. spherical-bowl-shaped, inner portion 14 having a convex surface 15. Inner portion 14 has a central hole 16 slightly smaller in diameter than pin 9; and a number of, e.g. four, angularly equally spaced radial slots 17 defining the same number of elastic tongues 18 extending towards hole 16. Each tongue 18 has an arc-shaped edge 19 defining a corresponding portion of central hole 16, and for elastically engaging pin 9.

According to the invention, elastic fastener 8 is molded from plastic material capable of imparting to elastic tongues 18 sufficient elastic force to ensure connection of the two panels 6 and 7. More specifically, the plastic material may be a glass-filled polymer. Advantageously, the polymer marketed by the trade name Nylon (registered trademark) may be used containing a glass percentage by weight ranging from 0% to 60% of the weight of the polymer. The ratio between the diameter D and the thickness S of disk 12 preferably ranges from 10 to 20. For example, the thickness S of a disk 12 with a diameter D of 22 mm may be roughly 1.5 mm.

Edge 19 of each tongue 18 has a surface 21, which is slightly conical towards convex surface 15 of inner portion 14 and is knurled - in the example shown, has a number of pointed radial projections 22, which are substantially pyramid-shaped with a base in the form of an irregular polygon (Figure 4), to improve connection to pin 9. Alternatively, surface 21 may be knurled with projections other than projection 22, or with grooves.

To connect panel 7 to panel 6, panel 7 is first positioned so as to insert each pin 9 inside the corresponding hole 11; an elastic fastener 8 is then placed on each pin 9, so that pin 9 engages hole 16 in fastener 8; and fastener 8 is then pressed so that outer rim 13 rests against panel 7, and panel 7 contacts panel 6.

Pin 9, being larger in diameter than hole 16, elastically deforms tongues 18, so that the knurled surface 21 of the tongues engages the outer surface of pin 9 with a certain amount of force. And, since pin 9 is also made of plastic material, the knurled surface 21 of edge 19 produces elastic microdeformations on the outer surface of pin 9 to connect fastener 8 to pin 9.

The connecting device may also be used to fix rigid or flexible panels to any wall or surface provided with pins 9. If pins 9 are metal as opposed to plastic, the outer surface of each pin 9 may be knurled with grooves, e.g. annular grooves, to connect each fastener 8 stably to respective pin 9.

The advantages, as compared with the known state of the art, of the connecting device according to the invention will be clear from the foregoing description. In particular, fastener 8 may be simply injection molded from plastic material in a mold designed to produce disk 12 with the convex portion, slots, and knurled edges in one single operation. The resulting fastener also needs no surface treatment to prevent corrosion by atmospheric agents, even in the event of surface abrasion, thus reducing the cost of the fastener with respect to a metal fastener.

Clearly, changes may be made to the connecting device and fastener as described herein without, however, departing from the scope of the accompanying Claims. For example, disk 12 may have other than four tongues 18; disk 12 and/or the section of pin 9 may be oval or any other shape, as opposed to circular; holes 11 in panel 7 may be edged with an annular reinforcing rim; and circular outer rim 13 of fastener 8 need not necessarily be flat.

## Claims

1. A device for the connection of two panels (6, 7) one on top of the other by means of at least one elastic fastener (8), wherein a first (6) of said panels (6, 7) has at least one pin (9) for engaging a corresponding hole (11) in the other panel (7); and wherein said elastic fastener (8) is defined by a disk (12) having an outer rim (13) for engaging said other panel (7), said outer rim (13) being flat to be placed contacting said other panel (7); said disk (12) having also an inner portion (14) with a central hole (16) into which said pin (9) is inserted; said inner portion (14) comprising a number of elastic tongues (18), each having an arc-shaped edge (19), which defines said central hole (16) and elastically engages said pin (9), said elastic fastener (8) being moulded from plastic material capable of imparting to said elastic tongues (18) sufficient elastic force to ensure said connection; **characterized in that** said inner portion (14) is bowl-shaped with a convex surface (15), said edge (19) having a surface (21) which is slightly conical towards said inner portion (14), said slightly conical surface (21) being knurled by means of a number of pointed radial projections (22) substantially pyramid-shaped.

2. A device as claimed in Claim 1, **characterized in that** said plastic material is defined by a glass-filled, polymer containing a percentage by weight of glass ranging from 0% to 60% of the weight of the polymer.

3. A device as claimed in Claim 2, wherein said disk (12) is circular, and said elastic tongues (18) are defined by radial slots (17) in said inner portion (14), **characterized in that** the ratio between the diameter (D) and the thickness (S) of said disk (12) ranges from 10 to 20.

4. A combination of two panels (6, 7) and the device as claimed in Claim 3, wherein said first panel (6) is made of plastic material, **characterized in that** said pin is made in one piece with said panel (6), the knurled surface (21) of said pin (9) being adapted to produce elastic micro deformations on the outer surface of said pin (9) to connect said fastener (8) to said pin (9).

5. A combination of two panels (6, 7) and the device as claimed in Claim 3, wherein said first panel (6) has a metal pin (9), **characterized in that** said pin (9) has a lateral surface knurled with substantially annular grooves to connect said fastener (8) to said pin (9).

6. A combination of two panels (6, 7) and the device as claimed in Claim 4 or 5, **characterized in that** said first panel (6) defines a cover of a vehicle internal combustion engine and said other panel (7) is made of soundproofing material.

## Patentansprüche

1. Vorrichtung zur Verbindung zweier aufeinanderliegender Platten (6, 7) mittels mindestens eines elastischen Befestigungselements (8), wobei eine erste (6) der genannten Platten (6, 7) mindestens einen Stift (9) zum Eingriff in ein entsprechendes Loch (11) in der anderen Platte (7) aufweist; und wobei das genannte, elastische Befestigungselement (8) definiert ist von einer Scheibe (12) mit einem Außenrand (13) zum Eingriff in die genannte andere Platte (7), und wobei der genannte Außenwand (13) eben ist, um in Berührung mit der genannten anderen Platte (7) angeordnet zu werden; wobei die genannte Scheibe (12) auch einen Innenabschnitt (14) mit einer mittigen Öffnung (16) umfasst, in die der genannte Stift (9) eingesetzt ist; und wobei der genannte Innenabschnitt (14) eine Anzahl elastischer Zungen (18) umfasst, von denen jede eine bogenförmige Kante (19) aufweist, die die mittige Öffnung (16) definiert und elastisch mit dem genannten Stift (9) in Eingriff tritt, wobei das genannte elastische Befestigungselement (6) aus einem plastischen Material geformt ist, das in der Lage ist, den genannten elastischen Zungen (18) eine ausreichende elastische Kraft mitzuteilen, um die genannte Verbindung sicherzustellen; **dadurch gekennzeichnet, dass** der genannte Innenabschnitt (14) schüsselförmig mit einer konvexen Oberfläche (15) ist, die genannte Einfassung (19) eine Oberfläche (21) aufweist, die zum genannten Innenabschnitt (14) hin leicht konisch ist, und die genannte, leicht konische Oberfläche (21) mittels einer Anzahl spitzer, radialer Vorsprünge (22), im Wesentlichen pyramidenförmig, gerändelt ist.

2. Vorrichtung nach Anspruch 1, **dadurch gekennzeichnet, dass** das genannte plastische Material von einem glasgefüllten Polymer definiert ist, das einen Gewichtsprozentsatz von Glas enthält, der von 0% bis 60% des Polymergewichts reicht.

3. Vorrichtung nach Anspruch 2, wobei die genannte Scheibe (12) kreisförmig ist, und die genannten elastischen Zungen (18) von radialen Schlitzen (17) im genannten Innenabschnitt (14) definiert sind, **dadurch gekennzeichnet, dass** das Verhältnis zwischen dem Durchmesser (D) und der Dicke (S) der genannten Scheibe (12) von 10 bis 20 reicht.

4. Kombination zweier Platten (6, 7) und der Vorrichtung, wie sie beansprucht ist in Anspruch 3, wobei die genannte erste Platte (6) aus Kunststoff hergestellt ist, **dadurch gekennzeichnet, dass** der genannte Stift in einem Stück mit der genannten Platte (6) ausgebildet ist, wobei die gerändelte Oberfläche (21) des genannten Stiftes (9) passend zur Erzeugung elastischer Mikroverformungen an der Außenoberfläche des genannten Stiftes (9) ausgebildet ist, um das genannte Befestigungselement (8) mit dem Stift (9) zu verbinden.

5. Kombination zweier Platten (6, 7) und der Vorrichtung, wie sie beansprucht ist in Anspruch 3, wobei die genannte erste Platte (6) einen Stift (9) aus Metall umfasst, **dadurch gekennzeichnet, dass** der genannte Stift (9) eine seitliche Oberfläche umfasst, die mit im Wesentlichen kreisförmigen Nuten gerändelt ist, um das genannte Befestigungselement (8) mit dem genannten Stift (9) zu verbinden.

6. Kombination zweier Platten (6, 7) und der Vorrichtung, wie sie beansprucht ist in Anspruch 4 oder 5, **dadurch gekennzeichnet, dass** die genannte erste Platte (6) eine Abdeckung eines Fahrzeugverbrennungsmotors definiert, und die genannte andere Platte (7) aus schalldichtendem Material hergestellt ist.

## Revendications

1. Dispositif pour relier deux panneaux (6, 7) l'un au-dessus de l'autre au moyen d'au moins une attache élastique (8), dans lequel un premier (6) desdits panneaux (6, 7) comporte au moins un goujon (9) qui coopère avec un trou correspondant (11) dans l'autre panneau (7) ; et dans lequel ladite attache élastique (8) est définie par un disque (12) ayant un bord extérieur (13) qui coopère avec ledit autre panneau (7), ledit bord extérieur (13) étant plat pour être placé au contact avec ledit autre panneau (7) ; ledit disque (12) ayant aussi une partie intérieure (14) comportant un trou central (16) dans lequel ledit goujon (9) est inséré ; ladite partie intérieure (14) comportant un certain nombre de languettes élastiques (18), ayant chacune un bord (19) en forme d'arc, qui définissent ledit trou central (16) et coopèrent de manière élastique avec ledit goujon (9), ladite attache élastique (8) étant moulée en un matériau plastique capable de donner auxdites languettes élastiques (18) une force élastique suffisante pour assurer ladite liaison ; **caractérisé en ce que** ladite partie intérieure (14) a la forme d'un bol avec une surface convexe (15), ledit bord (19) ayant une surface (21) qui est légèrement conique vers ladite partie intérieure (14), ladite surface légèrement conique (21) étant moletée au moyen d'un certain nombre de protubérances radiales pointues (22) de forme sensiblement pyramidale.

2. Dispositif tel que revendiqué dans la revendication 1, **caractérisé en ce que** ledit matériau plastique est défini par un polymère rempli de verre contenant un pourcentage en poids de verre allant de 0% à 60% du poids du polymère.

3. Dispositif tel que revendiqué dans la revendication 2, dans lequel ledit disque (12) est circulaire, et lesdites languettes élastiques (18) sont définies par des fentes radiales (17) dans ladite partie intérieure (14), **caractérisé en ce que** le rapport entre le diamètre (D) et l'épaisseur (S) dudit disque (12) varie de 10 à 20.

4. Combinaison de deux panneaux (6, 7) et dispositif tel que revendiqué dans la revendication 3, dans lesquels ledit premier panneau (6) est réalisé en un matériau plastique, **caractérisés en ce que** ledit goujon est fait d'une pièce avec ledit panneau (6), la surface moletée (21) dudit goujon (9) étant agencée pour produire des micro-déformations élastiques sur la surface extérieure dudit goujon (9) pour relier ladite attache (8) audit goujon (9).

5. Combinaison de deux panneaux (6, 7) et dispositif tel que revendiqué dans la revendication 3, dans lesquels ledit premier panneau (6) comporte un goujon métallique (9), **caractérisés en ce que** ledit goujon (9) a une surface latérale moletée avec des rainures sensiblement annulaires pour relier ladite attache (8) audit goujon (9).

6. Combinaison de deux panneaux (6, 7) et dispositif tel que revendiqué dans la revendication 4 ou 5, **caractérisés en ce que** ledit premier panneau (6) définit un couvercle d'un moteur à combustion interne d'un véhicule et ledit second panneau (7) est réalisé en un matériau insonorisant.
